# EUROPÄISCHE PATENTSCHRIFT

(11) **EP 2 351 018 B1**
(45) Veröffentlichungstag und Bekanntmachung des Hinweises auf die Patenterteilung: **20.08.2014**
(21) Anmeldenummer: 09748271.5
(22) Anmeldetag: 16.10.2009
(51) Int. Cl.: G10K 11/00, B63G 8/39

(54) **UNTERWASSERANTENNE**
SUBMARINE ANTENNA
ANTENNE SOUS-MARINE

(30) Priorität: 20.10.2008 DE 102008052355
(43) Veröffentlichungstag der Anmeldung: 03.08.2011
(73) Patentinhaber: ATLAS ELEKTRONIK GmbH, 28309 Bremen (DE)
(72) Erfinder: HOFFMANN, Christoph, 27777 Ganderkesee (DE); BARG, Ulrich, 28870 Ottersberg (DE); KRISTANN, Andreas, 28307 Bremen (DE)
(86) Internationale Anmeldenummer: PCT/EP2009/063580
(87) Internationale Veröffentlichungsnummer: WO 2010/046317

(56) Entgegenhaltungen:
- EP-A1- 0 654 953
- DE-A1-102006 060 796
- DE-U1- 8 812 782

## Beschreibung

Die Erfindung betrifft eine Unterwasserantenne zum Anbau an einen Bootskörper eines Unterseeboots nach dem Oberbegriff des Anspruchs 1.

Eine als Flankarray bezeichnete, bekannte, lineare Unterwasserantenne (DE 38 34 669 A1) weist einen im Abstand vom Bootskörper eines Unterseeboots, hier kurz U-Boot genannt, angeordnete Wandleranordnung mit einer Vielzahl von in Anbaulage der Unterwasserantenne längs des Bootskörpers horizontal hintereinander gereihten, voneinander beabstandeten Hydrophonen und zur Schirmwirkung gegenüber von dem Bootskörper abgestrahlten Schall eine in Schalleinfallseinrichtung hinter den Hydrophonen angeordnete Dämmplatte auf, die nach dem Feder-Masse-Prinzip ausgelegt ist und im unteren Frequenzbereich als schallweicher Reflektor wirkt. Die Hydrophone sind an der Dämmplatte über eine Schellenkonstruktion gehalten, und die Dämmplatte ist mit federnden Elementen über eine Dämpfungsschicht an die Körperwandung des Bootskörpers montiert.

Eine ebenfalls bekannte, lineare Seitenantenne an einem U-Boot (EP 0 214 525 B1) weist einen sog. Hydrophon-Streamer mit einer Mehrzahl von in einem elastischen, ölgefüllten Schlauch voneinander beabstandet angeordneten Hydrophonen auf. Der Hydrophon-Streamer ist über seine Längserstreckung von im Abstand voneinander am Bootskörper befestigten Haltegliedern mit Abstand vom Bootskörper gehalten. Die Halteglieder sind an einem mit dem Bootskörper verbundenen Fundament, z.B. durch Verschraubung, befestigt und tragen an ihrer freien Stirnseite schalenartige Befestigungselemente, die den Hydrophon-Streamer um seinen Schlauchmantel herum umgreifen. Zwischen jedem Befestigungselement und dem Schlauchmantel des Hydrophon-Streamers ist eine der Schallentkopplung dienende, elastische Einlage, z.B. aus Kunststoff oder Gummi, angeordnet. Der Hydrophon-Streamer und die Halteglieder mit ihren Befestigungselementen sind von einem Hüllkörper überdeckt, der an beiden Stirnseiten abgeschlossen ist und an mit dem Fundament verbundenen Befestigungslaschen befestigt ist.

Die Richtcharakteristik von solchen linearen Unterwasserantennen hat einen von der Antennenlänge abhängigen kleinen Öffnungswinkel in Horizontalrichtung und einen von der Eigencharakteristik der Hydrophone bestimmten, extrem großen Öffnungswinkel in Vertikalrichtung.

Eine bekannte, flächig ausgebildete Unterwasserantenne, auch Flächenantenne genannt (DE 10 2004 037 987 A1), ist aus einer Mehrzahl von panelartigen Antennensegmenten zusammengesetzt. Jedes Antennensegment weist einen akustisch transparenten, plattenartigen Kunststoffkörper auf, in dem in Reihen und Spalten angeordnete Hydrophone und eine als Reflektor dienende biegesteife Platte, die in Schalleinfallsrichtung hinter den Hydrophonen angeordnet ist, eingebettet sind. Eine solche, für Empfangsantennen im mittleren bis höheren Frequenzbereich ausgelegte Flächenantenne hat ein gutes Vor-Rückwärtsverhältnis und besitzt durch die Möglichkeit der addierten Zusammenfassung der Ausgangssignale der in Anbaulage der Antenne in Spalten vertikal untereinanderliegenden Hydrophone auch eine gute Bündelung der Richtcharakteristik im vertikalen Empfangsbereich und damit ein verbessertes Nutz-Störverhältnis. Eine solche beidseitig am U-Boot angeordnete Flächenantenne kann mit deutlichen Vorteilen in der Unterwasserdetektion gegenüber längsseits am U-Boot angeordneten, linearen Unterwasserantennen als nasses Ende eines Panoramasonars eingesetzt werden.

Eine bekannte, als sog. Zylinderbasis konfigurierte Unterwasserantenne (EP 0 654 953 A1) besitzt einen hohlzylindrischen Träger, auf dessen äußerem Zylindermantel eine Wandleranordnung aus einer Mehrzahl von in Anbaulage horizontal und vertikal aufgereihten, voneinander beabstandeten elektroakustischen Wandlern angeordnet ist. Vertikal angeordnete Wandler sind zusammen mit einem in Schalleinfallsrichtung ihnen nachgeordneten Reflektor in einem Hartumguss aus einem Elastomer eingebettet und bilden einen sog. Stave. Die Staves sind auf dem Träger in Umfangsrichtung nebeneinander angeordnet und mittels Kopfschrauben, die durch Bohrungen in Hartumguss und Reflektor hindurchgeführt sind, am Träger befestigt. Zwischen dem Reflektor und den Schraubenköpfen ist jeweils ein elastisches Federelement angeordnet.

Der Erfindung liegt die Aufgabe zugrunde, bei der Konzeption einer Flächenantenne für ein U-Boot den Anbau der flächenhaft ausgedehnten Unterwasserantenne an den Bootskörper so zu gestalten, dass der Reflektor gegenüber dem Bootskörper akustisch entkoppelt ist und Stöße und Schwingbelastungen ohne Schädigungen aufzunehmen vermag.

Die Aufgabe ist erfindungsgemäß durch die Merkmale im Anspruch 1 gelöst.

Die erfindungsgemäße Unterwasserantenne hat den Vorteil, dass die Schraubenverbindungen oder Verschraubungen zur Festlegung des Reflektors ausschließlich auf Zug beansprucht und durch Schwingungen und Stöße auftretende Quer- und Scherkräfte von den aus Stahl oder glasfaserverstärktem Kunststoff hergestellten, steifen Hülsen aufgenommen werden, so dass diese Kräfte die Gewindeverbindungen nicht belasten und somit nicht schädigen können. Durch die beiden federelastischen Elemente zwischen denen der Reflektor eingespannt ist, kann der Reflektor relativ zu den Schraubenverbindungen schwingen und ist akustisch weitgehend entkoppelt.

Zweckmäßige Ausführungsformen der erfindungsgemäßen Unterwasserantenne mit vorteilhaften Weiterbildungen und Ausgestaltungen der Erfindung ergeben sich aus den weiteren Ansprüchen.

Gemäß einer vorteilhaften Ausführungsform der Erfindung weist der Träger ein am Bootskörper befestigtes Fundament und einen zwischen Reflektor und Fundament angeordneten, vorzugsweise Hartschaum enthaltenden Auftriebskörper auf und das zweite federelastische Element stützt sich an dem Reflektor und an der dem Reflektor zugekehrten Oberseite des Auftriebskörpers ab. Durch den Auftriebskörper wird das Gewicht des massebehafteten Reflektors weitgehend kompensiert. Außerdem kann mittels des Auftriebskörpers und des durch diesen bewirkten größeren Abstands des Reflektors vom Bootskörper der an die Wandleranordnung gelangende Störschallpegel reduziert werden.

Gemäß einer vorteilhaften Ausführungsform der Erfindung ist zwischen dem ersten federelastischen Element und dem Auftriebskörper eine einen Spaltabstand zwischen Reflektor und Auftriebskörper herstellende Distanzhülse angeordnet, die auf der steifen Hülse sitzt. Durch diese Distanzhülse wird zwischen Auftriebskörper und Reflektor ein definierter, wassergefüllter Spalt geschaffen, der zur akustischen Entkopplung des Reflektors beiträgt. Außerdem kann durch entsprechende Bemessung der axialen Länge der Distanzhülse das zweite federelastische Element ausschließlich in Hinblick auf gewünschte Federeigenschaft dimensioniert werden.

Gemäß einer vorteilhaften Ausführungsform der Erfindung ist das zweite elastische Element in einer in den Reflektor von dessen dem Auftriebskörper zugekehrten Rückseite her eingebrachten Ausnehmung formschlüssig aufgenommen. Dadurch kann der Einbauraum für Distanzhülse und zweitem elastischen Element relativ kurz gehalten werden.
Gemäß einer vorteilhaften Ausführungsform der Erfindung ist das zweite elastische Element als Hohlzylinder aus Gummi oder Polyurethan ausgebildet. Zur Einstellung der Federeigenschaft des Hohlzylinders sind in diesen axiale Durchgangskanäle eingebracht. Mit der Anzahl und der Größe des lichten Querschnitts dieser Durchgangskanäle kann die gewünschte Federkonstante des Hohlzylinders eingestellt werden. Die Querschnittsform der Durchgangskanäle wird vorzugsweise kreis- oder trapezförmig ausgeführt. Andere Querschnittsformen sind möglich.

Gemäß einer vorteilhaften Ausführungsform der Erfindung sind die den Reflektor haltenden Schrauben in Gewindelöchern eingedreht, die in dem mit dem Bootskörper verbundenen Fundament vorgehalten sind. In diesem Fall durchdringen die die Schraubenschäfte umgebenden, steifen Hülsen den Auftriebskörper und stützen sich zwischen den Schraubenköpfen und dem Fundament ab.

Bei einer großen Tiefe des Auftriebskörpers, die unzulässig lange Schraubenschäfte zur direkten Verankerung des Reflektors im Fundament erfordern würde, sind gemäß einer alternativen Ausführungsform der Erfindung die die Schraubenschäfte umgebenden, steifen Hülsen mit einem Innengewinde versehen und im Auftriebskörper verankert, beispielsweise in im Auftriebskörper eingebrachte Bohrungen eingeklebt oder in den Auftriebskörper eingegossen. Die Schrauben werden in das Innengewinde der Hülsen so eingedreht, dass sich jeweils der Schraubenkopf, vorzugsweise über eine flache Scheibe, an der Hülse abstützt.

Gemäß einer vorteilhaften Ausführungsform der Erfindung erfolgt die Abstützung jeder Hülse an dem Schraubenkopf über eine zwischen dem ersten federelastischen Element und dem Schraubenkopf angeordnete, auf dem Schraubenschaft sitzende flache Scheibe. Durch diese Scheibe wird beim Eindrehen und Anziehen der Schraube das vorzugsweise als O-Ring aus Gummi oder Polyurethan ausgebildete, erste federelastische Element nicht auf Scherung beansprucht und damit nicht vorzeitig beschädigt.

Gemäß einer vorteilhaften Ausführungsform der Erfindung sind die Befestigungsmittel für den Reflektor ausschließlich nahe der in Anbaulage des Reflektors oberen und unteren Längskante des Reflektors angeordnet. Durch diese konstruktive Maßnahme hat der nur durch die Befestigungsmittel abgestützte, ansonsten freiliegende Reflektor eine größtmögliche Stützweite, wodurch die Eigenfrequenz des Reflektors in den tiefen Frequenzbereich verschoben wird. Infolgedessen besteht zwischen der Energie aus z.B. bei Detonationen auftretenden Druckwellen im höheren Frequenzbereich und der Eigenfrequenz des Reflektors eine deutliche Fehlanpassung, ein sog. Mismatch, sodass von dem Reflektor deutlich weniger Energie aufgenommen wird und die von den Befestigungsmitteln aufzubringenden Haltekräfte stark reduziert sind.

Gemäß einer vorteilhaften Ausführungsform der Erfindung ist der Reflektor in in Anbaulage horizontal und abstandslos aneinandergereihten Reflektorplatten mit deutlich größerer vertikaler Abmessung unterteilt und je ein Befestigungsmittel nahe der in Anbaulage oberen und unteren Kante einer Reflektorplatte angeordnet. Durch die Unterteilung des flächigen Reflektors in im Vergleich zu ihrer Länge recht schmalen Reflektorplatten werden tieffrequente Eigenschwingungsformen des Reflektors in Horizontalrichtung vermieden; denn die Eigenschwingungsformen der schmalen Reflektorplatten liegen in einem wesentlich höheren Frequenzbereich, somit die Reflexplatten durch tieffrequente Störungen deutlich schlechter anregbar sind.

Die Erfindung ist anhand eines in der Zeichnung dargestellten Ausführungsbeispiels im folgenden näher beschrieben. Es zeigen:
- Fig. 1: eine perspektivische Ansicht eines Antennensegments einer an einem Bootskörper eines U-Boots befestigten, elektroakustischen Unterwasserantenne,
- Fig. 2: einen vergrößerten Ausschnitt des Antennensegments in Fig. 1 im Bereich einer Befestigungsstelle, im Längsschnitt,
- Fig. 3: eine perspektivische Darstellung eines federelastischen Elements an der Befestigungsstelle in Fig. 2,
- Fig. 4: eine gleiche Darstellung wie in Fig. 2 eines modifizierten Ausführungsbeispiels,
- Fig. 5: eine perspektivische Darstellung eines Befestigungsfundaments in Fig. 4.

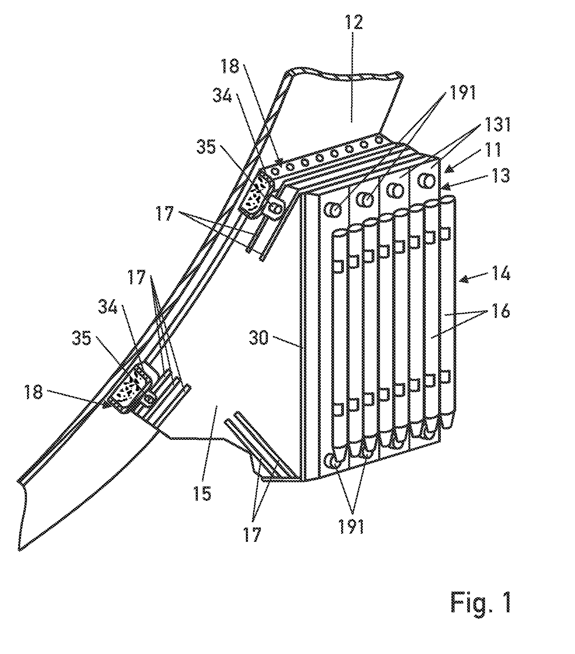

In Fig. 1 ist ein an eine Körperwand 12 eines Bootskörpers eines U-Boots festgelegtes Antennensegment 11 einer als flächige Seitenantenne eingesetzten Unterwasserantenne in perspektivischer Ansicht dargestellt. Je nach Antennenlänge sind mehrere solcher Antennensegmente 11 längs des Bootskörpers aneinandergesetzt und ergeben in ihrer Gesamtheit die in Horizontalrichtung langgestreckte Seitenantenne mit Ausdehnung in Vertikalrichtung. Üblicherweise ist je eine Seitenantenne an backbord und steuerbord vorhanden. Das Antennensegment 11 weist einen Reflektor 13 auf, der aus mehreren, im Ausführungsbeispiel der Fig. 1 vier, Reflektorplatten 131 zusammengesetzt ist. Die Reflektorplatten 131 sind in der in Fig. 1 zu sehenden Anbaulage des Antennensegments 11 horizontal abstandslos aneinandergesetzt, wobei sich ihre deutlich größere Abmessung in Vertikalrichtung erstreckt und der vertikalen Abmessung des Antennensegments 11 entspricht. Dem Reflektor 13 ist in Schalleinfallsrichtung eine flächenhaft ausgedehnte Wandleranordnung 14 vorgesetzt, die aus einer Vielzahl von in Anbaulage des Antennensegments 11 horizontal und vertikal jeweils voneinander beabstandet aufgereihten, elektroakustischen Wandlern besteht. Im dargestellten Ausführungsbeispiel weist die Wandleranordnung 14 mehrere vertikal ausgerichtete sog. Staves 16 auf, die in Horizontalrichtung voneinander beabstandet angeordnet sind. Im Ausführungsbeispiel der Fig. 1 sind jeweils zwei Staves 16 einer Reflektorplatte 131 vorgeordnet und an dieser festgelegt. In jedem Stave 16 sind mehrere elektroakustische Wandler voneinander beabstandet, vertikal untereinander angeordnet. Die Anzahl der vertikal untereinander angeordneten, elektroakustischen Wandler bestimmt durch additive Zusammenfassung der Wandlerausgangssignale den vertikalen Öffnungswinkel der Richtcharakteristik des Antennensegments 11.

Auf der von der Wandleranordnung 14 abgekehrten Rückseite des Reflektors 13 ist ein Auftriebskörper 15 angeordnet, dessen von dem Reflektor 13 abgekehrte Rückseite an den gewölbten Verlauf der Körperwand 12 des Bootskörpers angepasst ist. Zur Erzielung eines das Gewicht des Reflektors 13 mit Wandleranordnung 14 weitgehend kompensierenden Auftriebs weist der Auftriebskörper 15 - wie hier nicht zu sehen ist - einen Hartschaumkern auf, der von einer Vergußmasse umschlossen ist. Als Vergußmasse wird vorzugsweise ein Verbundwerkstoff aus einem Epoxidharz und eingelagerten, druckfesten Hohlkörpern, z.B. Glashohlkörpern, verwendet. Zur Erhöhung der Tragfestigkeit des Hartschaumkerns sind in den Auftriebskörper 15 noch langgestreckte steife Platten 17 aus glasfaserverstärktem Kunststoff eingegossen, die sich über die gesamte, in Anbaulage des Antennensegments horizontale Länge des Antennensegments erstrecken. Der Auftriebskörper 15 ist mit einem am Bootskörper befestigten Fundament 18 verbunden. Auftriebskörper 15 und Fundament 18 bilden einen Träger für den Reflektor 13, der mittels Befestigungsmittel, die nahe der in Anbaulage des Antennensegements 11 oberen und unteren Kante des Reflektors 13 platziert sind, am Träger festgelegt ist. Dabei sind jeweils zwei Befestigungsstellen einer Reflektorplatte 131 zugeordnet und nahe der oberen und unteren Kante angeordnet.

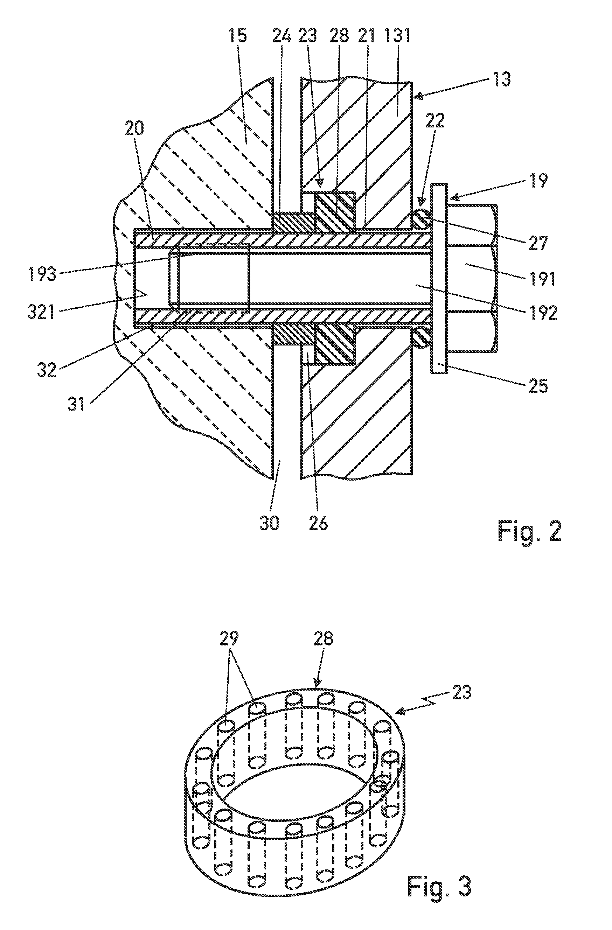

Als Befestigungsmittel kommen Schrauben 19, vorzugsweise Schraubenbolzen, zum Einsatz, die einen Schraubenkopf 191, einen Schraubenschaft 192 und ein an dem vom Schraubenkopf 191 abgekehrten Ende des Schraubenschafts 192 ausgebildetes Schraubgewinde 193 aufweisen. Zu den Befestigungsmitteln gehören weiterhin steife Hülsen 20 aus glasfaserverstärktem Kunststoff oder Stahl, von denen jede einen Schraubenschaft 192 aufnimmt und sich stirnseitig an dem Schraubenkopf 191 abstützt. Jede Hülse 20 ist durch ein entsprechendes Durchgangsloch 21 im Reflektor 13 hindurchgeführt und durchdringt teilweise oder ganz den Auftriebskörper 15. Zur akustisch entkoppelten Aufhängung des Reflektors 13, genauer gesagt jeder Reflektorplatte 131, ist auf jede Hülse 20 ein erstes federelastisches Element 22, ein zweites federelastisches Element 23 und eine Distanzhülse 24 aufgeschoben. Das erste federelastische Element 22, das als ein O-Ring 27 aus Gummi oder Polyurethan ausgebildet ist, ist zwischen dem Schraubenkopf 191 und der diesem zugekehrten Oberseite des Reflektors 13 angeordnet, wobei zwischen dem ersten federelastischen Element 22 und dem Schraubenkopf 191 noch eine ebenfalls auf die Hülse 20 aufgeschobene Flachscheibe 25 aus Metall eingelegt ist. Das zweite federelastische Element 23, das als Hohlzylinder 28 aus Gummi oder Polyurethan ausgebildet ist, ist in eine Ausnehmung 26 formschlüssig eingesetzt, die von der vom Schraubenkopf 191 abgekehrten Rückseite des Reflektors 13 her in den Reflektor 13 eingebracht ist. Der Gummi- oder Polyurethan-Hohlzylinder 28 ist in Fig. 3 perspektivisch dargestellt. Sein Innendurchmesser ist wenig größer als der Außendurchmesser der steifen Hülse 20. Zur Einstellung der gewünschten Federelastizität ist der Hohlzylinder 28 mit axialen Durchgangskanälen 29 versehen, die in Umfangsrichtung äquidistant angeordnet sind. Die Anzahl und der Querschnitt der Durchgangskanäle 29 bestimmt die Steifigkeit bzw. Weichheit des zweiten federelastischen Elements 23. Im dargestellten Ausführungsbeispiel sind die Durchgangskanäle 29 als Durchgangsbohrungen mit kreisrundem Querschnitt ausgebildet. Die Querschnittsform der Durchgangskanäle 29 kann jedoch beliebig gewählt werden, vorzugsweise auch trapezförmig. Die auf die steife Hülse 20 aufgeschobene Distanzhülse 24 stützt sich einerseits am zweiten federelastischen Element 23 und andererseits an der dem Reflektor 13 zugekehrten Oberfläche des Auftriebskörpers 15 ab. Durch ihre entsprechend gewählte axiale Länge wird ein Spalt 30 mit definierter axialer Breite zwischen dem Reflektor 13 und dem Auftriebskörper 15 hergestellt, der bei Einsatz der Unterwasserantenne mit Wasser gefüllt ist.

Im Ausführungsbeispiel der Fig. 2 ist der Reflektor 13 am Auftriebsköprer 15 des Trägers befestigt. Die steifen Hülsen 20 sind im Auftriebskörper 15 verankert und sind zumindest abschnittweise mit einem Innengewinde 31 versehen. Die Hülsen 20 werden entweder beim Herstellen des Auftriebskörpers 15 mit eingegossen oder nachträglich in in dem Auftriebskörper 15 vorgehaltenen Sackbohrungen 32 eingeklebt. Die Schrauben 19 sind mit ihrem Schraubgewinde 193 in das Innengewinde 31 der Hülsen 20 eingedreht, wobei durch eine gewisse Vorspannung die Hülsen 20 zwischen dem Schraubenkopf 191 und dem Bohrungsgrund 321 verspannt sind. Aus fertigungstechnischen Gründen kann das Innengewinde 31 aus der Hülse 20 in eine an der Hülse 20 sich anschließende metallische Gewindebuchse verlagert werden, die am Grund 321 der Sackbohrung 32 im Auftriebskörper 15 eingeklebt oder in den Auftriebskörper 15 bei dessen Fertigung mit eingegossen wird. Beim Einschrauben der Schraube 19 in die Gewindebuchse wird die in die Sackbohrung 32 im Auftriebskörper 15 eingesetzte Hülse 20 zwischen Gewindebuchse und Schraubenkopf 191 verspannt.

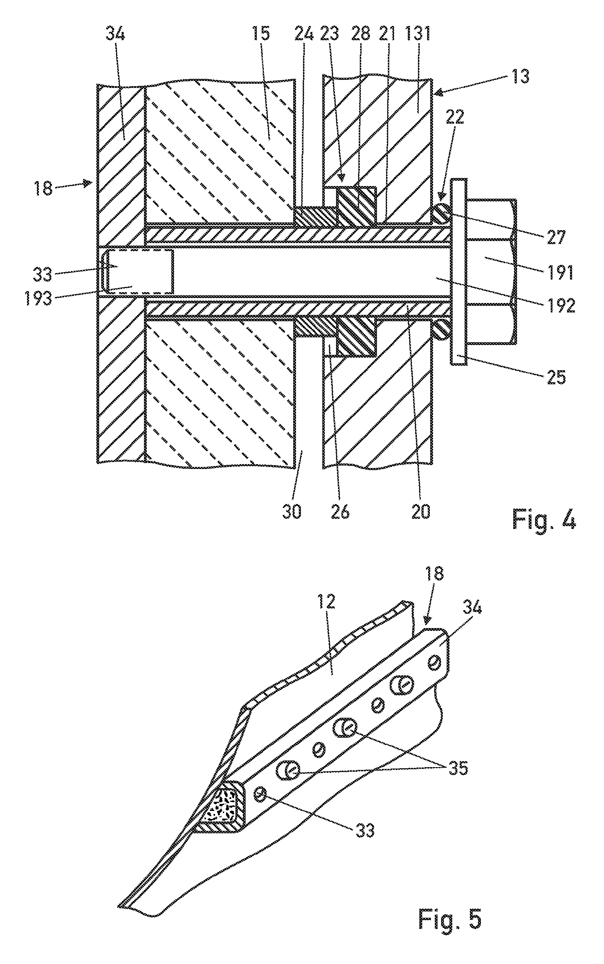

Die beschriebene Verankerung der Hülsen 20 in dem Auftriebskörper 15 wird dann angewendet, wenn die Abmessung des Auftriebskörpers 15, in Schraubenrichtung zu groß ist, als dass Schrauben 19 mit einer vernünftigen, bis zum Fundament 18 reichenden Schraubenschaftlänge eingesetzt werden können. Fällt der Auftriebskörper 15 jedoch schmaler aus, so wird das Befestigen des Reflektors 13 am Fundament 18 des Trägers eingedreht sind, indem die Schrauben 19 direkt in das Fundament 18 bevorzugt, wie dies in Fig. 4 dargestellt ist. Das Fundament 18 weist hierzu Gewindelöcher 33 auf, in die das Schraubgewinde 193 eingedreht wird. Die dann innen glattwandigen Hülsen 20 - bei denen also das Innengewinde gemäß Fig. 2 entfallen ist - stützen sich unmittelbar am Fundament 18 ab und sind durch die Vorspannung der Schrauben 19 zwischen den Schraubenköpfen 191, genauer gesagt zwischen den Flachscheiben 25, und dem Fundament 18 eingespannt.

Wie aus Fig. 1 ersichtlich ist, weist das Fundament 18 zwei im Vertikalabstand voneinander an der Körperwand 12 des Bootskörpers angeordnete U-Profil-Schienen 34 auf. Jede U-Profil-Schiene 34 ist auf sog. Knaggen befestigt, die in zwei vertikal übereinanderliegenden Reihen mit definiertem horizontalen Abstand voneinander am Bootskörper festliegen. Als Knaggen werden über die Körperwand 12 des Bootskörpers vorstehende zylindrische oder quaderförmige Befestigungsstützen verstanden, die jeweils mit einer Gewindebohrung versehen sind. In diese Gewindebohrungen werden durch die U-Profil-Schiene 34 hindurchgeführte Kopfbolzen 35 (Fig. 1 und 5) verschraubt. Zwischen den Durchgangslöchern für die Kopfbolzen 35 sind im Joch der U-Profil-Schienen 34 Gewindelöcher 33 (Fig. 5) vorgehalten. Im Ausführungsbeispiel der Fig. 1 und 2 ist an den U-Profil-Schienen 34 der Auftriebskörper 15 befestigt, wozu - wie hier nicht dargestellt ist - im Auftriebskörper 15 verankerte Schrauben in die Gewindelöcher 33 eingedreht sind. Im Ausführungsbeispiel der Fig. 4 sind in die Gewindelöcher 33 die Schraubenschäfte 192 der Schrauben 19 mit ihrem Schraubgewinde 193 eingedreht. Hierzu ist es erforderlich, dass das Profiljoch der U-Profil-Schienen 34 rechtwinklig zu den Schraubenachsen ausgerichtet ist. Um dies bei der gebogenen Körperwand 12 des Bootskörpers zu realisieren, ist die U-Profil-Schiene 34 mit unterschiedlichen Schenkellängen ausgeführt, wie dies aus Fig. 5 hervorgeht.

## Patentansprüche

1. Unterwasserantenne zum Anbau an einen Bootskörper eines Unterseeboots, mit mindestens einem Antennensegment (11), das eine flächenhaft ausgedehnte Wandleranordnung (14) aus einer Mehrzahl von in Anbaulage horizontal und vertikal aufgereihten, voneinander beabstandeten elektroakustischen Wandlern und einen in Schalleinfallsrichtung hinter der Wandleranordnung (14) angeordneten, plattenartigen Reflektor (13) aufweist, mit Befestigungsmitteln zum Festlegen des Reflektors (13) an einem mit dem Bootskörper verbindbaren Träger, die Schrauben (19) mit Schraubenkopf (191), Schraubenschaft (192) und Schraubgewinde (193) aufweisen, und mit ersten federelastischen Elementen (22) die zwischen den Schraubenschäften (191) und dem Reflektor (13) angeordnet sind,
**dadurch gekennzeichnet, dass** die Schraubenschäfte (192) durch jeweils eine durch den Reflektor (13) hindurchgeführte und in den Träger eintauchende, steife Hülse (20) hindurchgeführt und zwischen Reflektor (13) und Träger zweite federelastische Elemente (23) angeordnet sind und dass jeweils ein erstes und zweites federelastisches Element (22, 23) auf einer steifen Hülse (20) sitzen.

2. Unterwasserantenne nach Anspruch 1, **dadurch gekennzeichnet, dass** der Träger ein am Bootskörper befestigtes Fundament(18) und einen mit diesem verbundenen Auftriebskörper (15) aufweist und dass sich das zweite federelastische Element (23) an dem Reflektor (13) und an der dem Reflektor (13) zugekehrten Oberseite des Auftriebskörpers (15) abstützt.

3. Unterwasserantenne nach Anspruch 2, **dadurch gekennzeichnet, dass** zwischen dem zweiten federelastischen Element (23) und dem Auftriebskörper (15) eine einen Spalt (30) mit definierter Axialbreite zwischen Reflektor (13) und Auftriebskörper (15) herstellende Distanzhülse (24) angeordnet ist, die auf der steifen Hülse (20) sitzt.

4. Unterwasserantenne nach einem der Ansprüche 1 bis 3, **dadurch gekennzeichnet, dass** das zweite federelastische Element (23) in einer in den Reflektor (13) von dessen dem Auftriebskörper (15) zugekehrten Rückseite her eingebrachten Ausnehmung (26) formschlüssig einliegt.

5. Unterwasserantenne nach einem der Ansprüche 1 bis 4, **dadurch gekennzeichnet, dass** das zweite federelastische Element (23) ein Hohlzylinder (28) aus Gummi oder Polyurethan ist, der eine Mehrzahl von axialen Durchgangskanälen (29) aufweist, die in Umfangsrichtung nebeneinander, vorzugsweise äquidistant, angeordnet sind.

6. Unterwasserantenne nach einem der Ansprüche 1 bis 5, **dadurch gekennzeichnet, dass** das erste federelastische Element (22) ein O-Ring aus Gummi oder Polyurethan ist.

7. Unterwasserantenne nach einem der Ansprüche 1 bis 6, **dadurch gekennzeichnet, dass** die Schrauben (19) in im Fundament (18) enthaltene Gewindelöcher (33) oder in in dem Auftriebskörper (15) festgelegte Gewindebuchsen eingedreht sind und dass die steifen Hülsen (20) zwischen den Schraubenköpfen (191) und dem Fundament (18) bzw. den Gewindebuchsen eingespannt sind.

8. Unterwasserantenne nach einem der Ansprüche 2 bis 6, **dadurch gekennzeichnet, dass** die steifen Hülsen (20) im Auftriebskörper (15) verankert, vorzugsweise eingeklebt, sind und einen Innengewindeabschnitt (31) aufweisen und dass die Schrauben (19) in die Innengewindeabschnitte (31) der Hülsen (20) so eingedreht sind, dass sich die Hülsen (20) an den Schraubenköpfen (191) abstützen.

9. Unterwasserantenne nach Anspruch 7 oder 8, **dadurch gekennzeichnet, dass** die Abstützung der Hülsen (20) an den Schraubenköpfen (191) jeweils über eine zwischen dem ersten federelastischen Element (22) und dem Schraubenkopf (191) angeordnete, auf den Schraubenschaft 191) aufgeschobene Flachscheibe (25) vorgenommen ist.

10. Unterwasserantenne nach einem der Ansprüche 1 bis 9, **dadurch gekennzeichnet, dass** die Befestigungsmittel ausschließlich nahe der in Anbaulage des Reflektors (13) oberen und unteren Längskante des Reflektors (13) angeordnet sind.

11. Unterwasserantenne nach Anspruch 10, **dadurch gekennzeichnet, dass** der Reflektor (13) in in Anbaulage horizontal abstandslos aneinandergereihten Reflektorplatten (131) mit einer deutlich größeren vertikalen Abmessung unterteilt ist und dass je eine durch die Befestigungsmittel hergestellte Befestigungsstelle nahe der in Anbaulage oberen und unteren Kante einer Reflektorplatte (131) vorgesehen ist.

12. Unterwasserantenne nach einem der Ansprüche 1 bis 11, **dadurch gekennzeichnet, dass** das Fundament (18) zwei im Vertikalabstand parallel zueinander ausgerichtete U-Profil-Schienen (34) aufweist, die auf am Bootskörper angeordneten Knaggen befestigt sind.

13. Unterwasserantenne nach einem der Ansprüche 1 bis 12, **dadurch gekennzeichnet, dass** mehrere Antennensegmente (11) in Anbaulage horizontal aneinandergereiht sind.

## Claims

1. Submarine antenna for mounting on the hull of a submarine, comprising at least one antenna segment (11) having a planar transducer arrangement (14) consisting of a plurality of electroacoustic transducers disposed at a distance from one another in horizontal and vertical rows in the mounted position and a plate-like reflector (13) arranged downstream of the transducer arrangement (14) in the sound incidence direction, comprising fastening means for fixing the reflector (13) to a carrier that can be connected to the hull, said fastening means having screws (19) with a screw head (191), screw shank (192) and screw thread (193), and comprising first resilient elements (22) arranged between the screw shanks (191) and the reflector (13), **characterised in that** the screw shanks (192) are each guided through respective rigid sleeves (20) guided through the reflector (13) and inserted into the carrier and second resilient elements (23) are arranged between the reflector (13) and the carrier and that respective first and second resilient elements (22, 23) are seated on each rigid sleeve (20).

2. Submarine antenna according to claim 1, **characterised in that** the carrier has a base (18) fastened to the hull and a buoyancy unit (15) connected thereto and that the second resilient element (23) is supported on the reflector (13) and on the top surface of the buoyancy unit (15) directed towards the reflector (13).

3. Submarine antenna according to claim 2, **characterised in that** a spacer sleeve (24) producing a gap (30) with a defined axial width between the reflector (13) and the buoyancy unit (15) is arranged between the second resilient element (23) and the buoyancy unit (15) and is seated on the rigid sleeve (20).

4. Submarine antenna according to one of claims 1 to 3, **characterised in that** the second resilient element (23) engages positively in a recess (26) introduced into the reflector (13) from its rear surface directed towards the buoyancy unit (15).

5. Submarine antenna according to one of claims 1 to 4, **characterised in that** the second resilient element (23) is a hollow cylinder (28) made of rubber or polyurethane and having a plurality of axial through channels (29) arranged alongside one another, preferably equidistantly, in the circumferential direction.

6. Submarine antenna according to one of claims 1 to 5, **characterised in that** the first resilient element (22) is an O-ring made of rubber or polyurethane.

7. Submarine antenna according to one of claims 1 to 6, **characterised in that** the screws (19) are screwed into threaded holes (33) contained in the base (18) or into threaded bushes fixed in the buoyancy unit (15) and that the rigid sleeves (20) are clamped between the screw heads (191) and the base (18) or the threaded bushes.

8. Submarine antenna according to one of claims 2 to 6, **characterised in that** the rigid sleeves (20) are anchored, preferably glued, in the buoyancy unit (15) and have an internally threaded portion (31) and that the screws (19) are screwed into the internally threaded portions (31) of the sleeves (20) in such a manner that the sleeves (20) are supported on the screw heads (191).

9. Submarine antenna according to claim 7 or claim 8, **characterised in that** the sleeves (20) are each supported on the screw heads (191) via respective plain washers (25) arranged between the first resilient element (22) and the screw head (191) and slipped on to the screw shank 191).

10. Submarine antenna according to one of claims 1 to 9, **characterised in that** the fastening means are arranged exclusively close to the upper and lower longitudinal edges of the reflector (13) in the mounted position of the reflector (13).

11. Submarine antenna according to claim 10, **characterised in that** the reflector (13) is divided into reflector panels (131) with a significantly larger vertical dimension arranged immediately adjacent to one another in a horizontal row in the mounted position and that respective fastening points produced by the fastening means are provided close to the upper and lower edges of each reflector panel (131) in the mounted position.

12. Submarine antenna according to one of claims 1 to 11, **characterised in that** the base (18) has two U-shaped sections (34) aligned in parallel at a vertical distance from one another and fastened to cleats arranged on the hull.

13. Submarine antenna according to one of claims 1 to 12, **characterised by** a plurality of antenna segments (11) arranged in a horizontal row in the mounted position.

## Revendications

1. Antenne sous-marine destinée à être montée sur la coque d'un sous-marin, comportant au moins un segment d'antenne (11) présentant un ensemble de transducteurs (14) s'étendant en plan et se composant d'une pluralité de transducteurs électroacoustiques disposés en rangée horizontale et verticale à distance les uns des autres dans la position de montage, et un réflecteur (13) en forme de plaque disposé dans la direction d'incidence du son à l'arrière de l'ensemble de transducteurs (14) ; des moyens de fixation destinés à fixer le réflecteur (13) sur un support susceptible d'être relié à la coque, lesquels moyens de fixation présentent des vis (19) possédant une tête de vis (191), une tige de vis (192) et un filet (193) ; et des premiers éléments élastiques (22) qui sont disposés entre les tiges de vis (192) et le réflecteur (13),
**caractérisée en ce que** les tiges de vis (192) sont chacune insérées dans un manchon rigide (20) inséré par le réflecteur (13) et pénétrant dans le support, **en ce que** des seconds éléments élastiques (23) sont disposés entre le réflecteur (13) et le support, et **en ce qu'**un premier et un second élément élastique (22, 23) reposent respectivement sur un manchon rigide (20).

2. Antenne sous-marine selon la revendication 1, **caractérisée en ce que** le support présente une assise (18) fixée sur la coque et un corps de portance (15) relié à ladite assise, et **en ce que** le second élément élastique (23) repose contre le réflecteur (13) et contre la face supérieure du corps de portance (15) tournée vers le réflecteur (13).

3. Antenne sous-marine selon la revendication 2, **caractérisée en ce qu'**une entretoise (24) formant une fente (30) d'une largeur axiale bien précise entre le réflecteur (13) et le corps de portance (15) est disposée entre le second élément élastique (23) et le corps de portance (15) et repose sur le manchon rigide (20).

4. Antenne sous-marine selon l'une quelconque des revendications 1 à 3, **caractérisée en ce que** le second élément élastique (23) repose par coopération de forme dans un évidement (26) pratiqué dans le réflecteur (13) depuis sa face arrière tournée vers le corps de portance (15).

5. Antenne sous-marine selon l'une quelconque des revendications 1 à 4, **caractérisée en ce que** le second élément élastique (23) est un cylindre creux (28) en caoutchouc ou en polyuréthane qui présente une pluralité de canaux traversants (29) axiaux disposés côte à côte dans le sens circonférentiel et ce, de préférence à équidistance.

6. Antenne sous-marine selon l'une quelconque des revendications 1 à 5, **caractérisée en ce que** le premier élément élastique (22) est un joint torique en caoutchouc ou en polyuréthane.

7. Antenne sous-marine selon l'une quelconque des revendications 1 à 6, **caractérisée en ce que** les vis (19) sont introduites dans des trous taraudés (33) réalisés dans l'assise (18) ou dans des manchons taraudés vissés dans le corps de portance (15), et **en ce que** les manchons rigides (20) sont contraints entre les têtes de vis (191) et l'assise (18) ou les manchons taraudés.

8. Antenne sous-marine selon l'une quelconque des revendications 2 à 6, **caractérisée en ce que** les manchons rigides (20) sont ancrés, de préférence collés, dans le corps de portance (15) et présentent une section taraudée (31), et **en ce que** les vis (19) sont vissées dans les sections taraudées (31) des manchons (20) de façon que les manchons (20) viennent en butée contre les têtes de vis (191).

9. Antenne sous-marine selon la revendication 7 ou 8, **caractérisée en ce que** la mise en butée des manchons (20) contre les têtes de vis (191) s'effectue respectivement par l'intermédiaire d'une rondelle plate (25) glissée sur la tige de vis (192) et disposée entre le premier élément élastique (22) et la tête de vis (191).

10. Antenne sous-marine selon l'une quelconque des revendications 1 à 9, **caractérisée en ce que** les moyens de fixation sont disposés exclusivement à proximité des bords longitudinaux supérieur et inférieur du réflecteur (13), vus dans la position de montage du réflecteur (13).

11. Antenne sous-marine selon la revendication 10, **caractérisée en ce que** le réflecteur (13) est subdivisé en des plaques réflectrices (131) juxtaposées horizontalement les unes aux autres sans écart et présentant une dimension verticale nettement plus grande, et **en ce qu'**il est respectivement prévu une position de fixation créée par les moyens de fixation à proximité des bords supérieur et inférieur d'une plaque réflectrice (131), vus dans la position de montage.

12. Antenne sous-marine selon l'une quelconque des revendications 1 à 11, **caractérisée en ce que** l'assise (18) présente deux rails profilés en U (34), disposés parallèlement l'un à l'autre en étant espacés verticalement et fixés sur des renforts disposés sur la coque.

13. Antenne sous-marine selon l'une des revendications 1 à 12, **caractérisée en ce que** plusieurs segments d'antenne (11) sont disposés en rangée horizontale dans la position de montage.
